# EUROPÄISCHE PATENTANMELDUNG

(11) **EP 0 752 552 A1**
(43) Veröffentlichungstag der Anmeldung: **08.01.1997**
(21) Anmeldenummer: 96108847.3
(22) Anmeldetag: 03.06.1996
(51) Int. Cl.: F16K 11/078

(54) **Einsatz für ein Einhebelmischventil**

(30) Priorität: 07.07.1995 DE 29511010 U
(71) Anmelder: Flühs Drehtechnik GmbH., D-58515 Lüdenscheid (DE)
(72) Erfinder: Ziebach, Helmut, 58515 Lüdenscheid (DE)
(74) Vertreter: Dörner, Lothar, Dipl.-Ing.

(57) **Zusammenfassung**

Der Einsatz weist ein ortsfestes Gehäuse (1) auf. Das Gehäuse (1) besteht aus Messing. Bezogen auf das Gehäuse (1) ist ein Übertragungsteil drehbar und radial bewegbar. In das Übertragungsteil greift eine dreh- und schwenkbare Spindel ein. Von plan aneinanderliegenden und Durchbrüche aufweisenden Scheiben ist eine an dem Gehäuse (1), eine andere an dem Übertragungsteil befestigt. An der ortsfesten Scheibe liegt eine Dichtungsscheibe (10) an.

## Beschreibung

Die Erfindung betrifft einen Einsatz für ein Einhebel-Mischventil, mit einem ortsfesten Gehäuse, mit einem bezogen auf das Gehäuse drehbaren und radial bewegbaren Übertragungsteil, mit einer in das Übertragungsteil eingreifenden, dreh- und schwenkbaren Spindel, mit plan aneinanderliegenden und Durchbrüche aufweisenden Scheiben, von denen eine an dem Gehäuse, eine andere an dem Übertragungsteil befestigt ist, und mit einer an der ortsfesten Scheibe anliegenden Dichtungsscheibe.

Einsätze der vorgenannten Art, auch als Kartuschen bezeichnet, sind bekannt (DE-A-42 38 671; DE-A-29 29 199). Bei den bekannten Einsätzen besteht das Gehäuse aus Kunststoff.. Das hat den Nachteil, daß dann, wenn nach dem Einbau des Einsatzes in das Einhebel-Mischventil Druck auf den Einsatz ausgeübt wird, das Gehäuse nachgibt, wonach die in der Regel aus Keramik bestehenden Scheiben über das gewohnte Maß hinaus aneinander gedrückt werden, was ihre Funktion beeinträchtigt.

Hier will die Erfindung Abhilfe schaffen. Der Erfindung liegt die Aufgabe zugrunde, einen Einsatz der genannten Art so auszubilden, daß die innerhalb des Gehäuses enthaltenen Teile auch dann, wenn Druck auf den Einsatz ausgeübt wird, in ihrer Lage und Wirkung zueinander keine Änderungen gegenüber dem unbelasteten Zustand erfahren. Gemäß der Erfindung wird diese Aufgabe dadurch gelöst, daß das Gehäuse aus Messing besteht. Der Einsatz nach der Erfindung ist allen Belastungen, die beim Einbau in ein Einhebel-Mischventil auftreten können, in der Weise gewachsen, daß alle zueinander beweglichen Teile auf die gleiche Weise zueinander wirken und aufeinander Kräfte ausüben, wie dies bei einem unbelasteten Einsatz der Fall ist. Insbesondere kann sich das Gehäuse unter Druck nicht verformen. Die Erfindung hat außerdem den Vorteil, daß sie in Großserie hergestellt werden kann.

Ausgestaltungen und Weiterbildungen der Erfindung sind in den Unteransprüchen beschrieben.

Ein Ausführungsbeispiel der Erfindung ist in der Zeichnung dargestellt und wird nachfolgend im einzelnen beschrieben. Es zeigen etwa in natürlicher Größe:

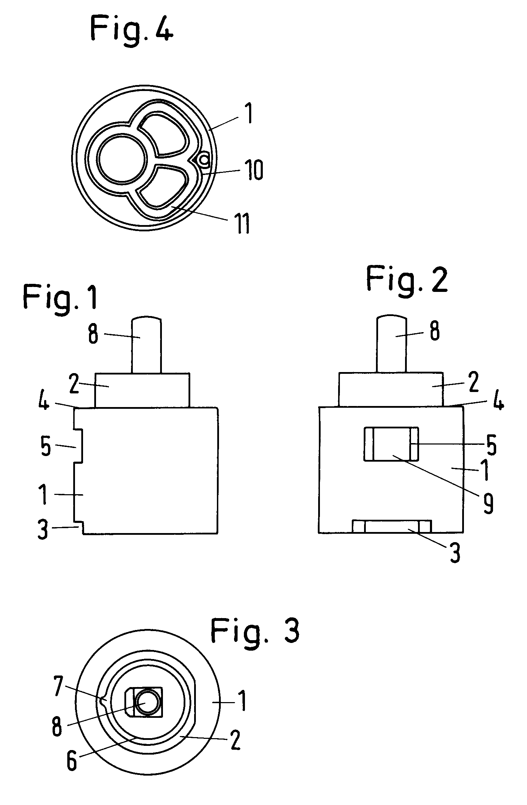

Fig. 1 eine Ansicht eines Einsatzes;
Fig. 2 die Seitenansicht des Einsatzes von links;
Fig. 3 die Draufsicht des Einsatzes;
Fig. 4 die Unteransicht des Einsatzes.

Der als Ausführungsbeispiel gewählte Einsatz weist ein Gehäuse 1 aus Messing auf. Das Gehäuse 1 enthält an seiner einen Stirnseite einen Kragen 2. Auf der entgegengesetzten Stirnseite ist ein nach Art einer Sekante zur Grundfläche verlaufender Schlitz 3 vorgesehen. Zwischen dem durch den Kragen 2 gebildeten Absatz 4 des Gehäuses und dem Schlitz 3 ist ein Fenster 5 vorgesehen.

Der Kragen ist mit einer Hülse 6 ausgekleidet. Die Hülse 6 nimmt ein Lager für eine Spindel 8 auf. Die Hülse 6 ist mit einer Nase 7 für ihre lagerichtige Befestigung in dem Kragen 2 versehen. In dem nicht sichtbaren Bereich weist die Hülse 6 Anschläge für die Drehbegrenzung der Spindel 8 auf.

Durch das Fenster 5 tritt ein Nocken 9 eines im übrigen ebenfalls nicht sichtbaren Übertragungsteils auf.

Auf der der Hülse 6 abgewandten Seite ist das Gehäuse 1 von einer Dichtungsscheibe 10 verschlossen. In die Dichtungsscheibe 10 ist ein Dichtungsring 11 eingelegt, der im Ausführungsbeispiel dreigeteilt ist und einerseits die Zufuhr von Warmwasser und Kaltwasser, andererseits den Auslauf von Mischwasser abdichtet.

Im übrigen sind Aufbau und Wirkungsweise des Einsatzes aus DE-A-42 38 671 bekannt.

## Patentansprüche

1. Einsatz für ein Einhebel-Mischventil, mit einem ortsfesten Gehäuse (1), mit einem bezogen auf das Gehäuse (1) drehbaren und radial bewegbaren Übertragungsteil, mit einer in das Übertragungsteil eingreifenden, dreh- und schwenkbaren Spindel (8), mit plan aneinanderliegenden und Durchbrüche aufweisenden Scheiben, von denen eine an dem Gehäuse (1), eine andere an dem Übertragungsteil befestigt ist, und mit einer an der ortsfesten Scheibe anliegenden Dichtungsscheibe (10), dadurch gekennzeichnet, daß das Gehäuse (1) aus Messing besteht.

2. Einsatz nach Anspruch 1, dadurch gekennzeichnet, daß das Gehäuse (1) an seiner der Spindel (8) zugewandten Seite einen Kragen (2) aufweist, der mit einer Anschläge für die Drehbegrenzung der Spindel (8) enthaltenden Hülse (6) ausgekleidet ist.

3. Einsatz nach Anspruch 1 oder 2, dadurch gekennzeichnet, daß das Gehäuse (1) ein Fenster (5) für den Durchtritt eines mit dem Übertragungsteil verbundenen Nockens (9) aufweist.

4. Einsatz nach einem der Ansprüche 1 bis 3, dadurch gekennzeichnet, daß das Gehäuse (1) auf seiner der Dichtungsscheibe (10) zugewandten Seite einen nach Art einer Sekante zur Grundfläche verlaufenden Schlitz (3) aufweist.
